# EUROPEAN PATENT APPLICATION

(11) **EP 3 907 649 A1**
(43) Date of publication of application: **10.11.2021**
(21) Application number: 20172774.0
(22) Date of filing: 04.05.2020
(51) Int. Cl.: G06K 9/00, G08G 1/00, H04W 4/44, H04W 4/46

(54) **AN INFORMATION PROVIDING SYSTEM AND METHOD FOR A MOTOR VEHICLE**

(71) Applicant: Veoneer Sweden AB, 447 37 Vårgårda (SE)
(72) Inventor: LINDSKOG, Peter, 583 30 Linköping (SE); ROLL, Jacob, 585 97 Linköping (SE)
(74) Representative: Müller Verweyen

(57) **Abstract**

An on-board information providing system (10) of a motor vehicle (40) comprises an imaging apparatus (11) adapted to capture images from a surrounding of the motor vehicle (40), a data processing unit (14) adapted to detect objects in the surrounding of the motor vehicle (40) by performing image processing on images captured by said imaging apparatus (11), and a wireless communication device (20) adapted to communicate with an external receiver (41; 45). The data processing unit (14) is adapted to detect an anomaly of another vehicle (41) by said image processing, and to send out anomaly information about said detected anomaly via said wireless communication device (20).

## Description

The invention relates to an information providing system for a motor vehicle, comprising an imaging apparatus adapted to capture images from a surrounding of the motor vehicle, a data processing unit adapted to detect objects in the surrounding of the motor vehicle by performing image processing on images captured by said imaging apparatus, and a wireless communication device adapted to communicate with an external communication unit. The invention also relates to a corresponding information providing method.

Such an information providing system is known for example from DE 10 2007 050 056 B4.

In present motor vehicles, the front end camera is used to monitor location and distance to vehicles, pedestrians, traffic signs, road lanes, and so on. This information is primarily used to support Advanced Driver Assistance System (ADAS) or Autonomous Driving (AD) functionality.

The problem underlying the present invention is to enhance the overall security in motor traffic.

The invention solves this object with the features of the independent claims. According to the invention, the processing unit is adapted to detect an anomaly of another motor vehicle, like a car, through image processing of images captures by the imaging apparatus. According to the invention, the imaging apparatus is used to detect anomalies in motor vehicles in front of the ego vehicle. Once an anomaly is detected, a suited action can be initiated by sending an anomaly information signal containing information on the detected anomaly via the wireless communication device.

Preferably, a responsible person of the other car, like the driver and/or the owner, can be informed of the anomaly in one way or the other. In certain embodiments, the other vehicle can be informed about the anomaly using either direct car-to-car communication. Preferably, therefore, the wireless communication device is adapted for direct (car-to-car) communication with the other vehicle. In other embodiments, the other vehicle can be informed about the anomaly via a wireless communication network, like the internet or a data cloud. Preferably, therefore, the wireless communication device is adapted for communication with a base station of a terrestrial communication network.

The recipient of the anomaly information can also be a mobile phone belonging to a responsible person of the other vehicle, like the driver and/or the owner of the car. In this case, the anomaly information is presented in the mobile phone (but not necessarily in a display, e.g. in the dashboard, of the other vehicle). Such service, possibly bundled together with other services, can be a subscriber service, i.e. subscribed to by the owner of the car, where the owner usually pays a fee for the service.

Preferably, the processing unit is adapted to detect one or more of the following anomalies: an unbalanced wheel of the other motor vehicle; an abnormally positioned and/or partly detached vehicle part of the other motor vehicle, like exhaust pipe, a protective part (like protective underbody plate) and/or license plate. For example, if the other vehicle runs over a speed bump, pot hole, curbstone or goes on an uneven road or off-road, this may cause a partly detached vehicle part to fall off, hit the ground and be broken, or hit other parts of the other vehicle being damaged, or in the worst case hit a pedestrian or another road user.

Preferably, the imaging apparatus comprises an infrared imaging device adapted to detect hot spots (i.e., much hotter than environment), e.g. from brakes, exhaust pipe, etc., and the data processing unit is adapted to take information about hot spots into account in said anomaly detection. This can be advantageous in the anomaly detection of hot parts.

Preferably, an anomaly detector based on a neural network, for example a convoluted neural network (CNN) is used for detecting said anomaly of the other motor vehicle. Detection of anomalies of the above kind can be made by using a CNN in the same way as other vehicles, pedestrians, etc. in the surrounding of the ego vehicle are detected. A CNN anomaly detector can be collocated with other CNN based detector functions in the image processing unit and share computational resources with these.

The solution is not limited to a front looking camera but can be used for any camera mounted in the ego vehicle looking at the surrounding of it. An infrared (IR) camera may be used, or any other imaging sensor looking at the surroundings of the ego vehicle. Information from an IR camera can, e.g., detect unnatural hot spots from an exhaust pipe or from the brake system of another vehicle and determine if over-heating has occurred.

Preferably, the data processing unit is adapted to obtain identification information of the other motor vehicle, and to compare said identification information with subscriber information available to said data processing unit.

There are at least two basic embodiments to realize a subscription service technically under the present invention.

In a first basic embodiment, information about the subscribers of the subscription service is stored in the data memory of the ego vehicle and thus available in the ego vehicle. The ego vehicle is thus by its own able to identify if the other vehicle in the surroundings belongs to a subscriber of the service. Preferably, therefore, a database with subscriber information is stored in a data memory of said data processing unit.

Preferably, the data processing unit is adapted to obtain identification information of the other motor vehicle via image processing of images captured by said imaging apparatus. Identification of the vehicle in the surroundings can be made for example (a) via an algorithm that detects a number plate of the other vehicle and extracts a registration number via image processing from a captured image. Alternatively, the vehicle in the surroundings can for example be identified (b) by sending an identity request about the identity of the other vehicle (like requesting a registration number) via said communication unit, in particular through a car-to-car communication connection.

Matching this information with the subscription list stored in the ego data memory is used to determine whether the car in front belongs to a subscriber or not. The subscriber information list can be downloaded and stored in the ego data memory for example at a service occasion in a garage, or via a wireless communication link to the service provider.

In a second basic embodiment, the ego vehicle can identify the other vehicle using one of methods (a) or (b) described above. The ego vehicle then sends an inquiry to a remote service provider via a wireless communication link through said wireless communication device whether the other vehicle belongs to a subscriber or not. The inquiry posed to the service provider can for example be a textual one (like registration number data) or a small camera image patch around the registration plate that the service provider can use to identify the other vehicle under investigation. Preferably, therefore, the data processing unit is adapted to obtain the subscriber information of the other motor vehicle by sending out a subscriber request via said communication unit.

With respect to the anomaly detection by said data processing unit, generally there are many different methods to detect objects in images. As mentioned above, a preferred method uses a Convolutional Neural Network (CNN), while other possibilities are possible for anomaly detection in the proposed invention.

Detecting vehicles of different kinds from a front looking camera using a CNN is well known. Supervised learning is typically applied, which means that the CNN is trained based on a large set of images covering a multitude of scenarios, where the vehicles have been pointed out, either manually or by an algorithm. Anomaly detection could also be done by unsuper-vised learning, through learning distributions of normal car appearances and then detect when something is different.

One approach to detect anomalies is to add an extra property, i.e. an anomaly flag, to the marked vehicle objects in the training phase of the neural network, which property or flag can assume two values, i.e. can be either True or False. Alternatively, a class label which can assume more than two values and detailing the anomaly, like "loose exhaust pipe", "loose protective part", "unbalanced wheel", etc. may be added to the marked vehicle objects in the training phase. This information can readily be included in the training set-up, i.e. the optimization criterion used in the training of the CNN.

A more advanced marking approach is to mark the location of the anomaly using, e.g. an anomaly bounding box, in particular a rectangular anomaly bounding box.

For a CNN training to be successful, a lot of images with and without anomalies are needed. While the latter can be effortlessly obtained, it might be difficult to find vehicles with, e.g., loose exhaust pipes. To overcome this, preferably one starts off from images without anomalies and augment in adequate anomalies into images, while keeping the rest of the image intact. Simulation of full scenarios with and without vehicles with anomalies is an alternative.

Another approach comprises a two step procedure, where a first CNN is used for vehicle detection and classification. This first network is trained without regarding anomalies. In the next step, detected/classified vehicles are passed to a second CNN adapted to vehicle anomaly detection and classification. It is trained based on image patches containing detected vehicles with and without anomalies, preferably using augmentation as described above.

The second CNN, used for anomaly detection and classification, which only needs to take into consideration image patches with vehicles, is typically much smaller than the first network which needs to look at the whole scene to find the vehicles.

To handle different distances by the second network, up- or down-sampling of the image patches to a certain fixed size can be performed. In fact, if only anomalies under the chassis shall be considered, the image used for anomaly detection and classification can be restricted to the lower part of the image or to the lower part of the image patch. For example, if a registration plate has already been detected, it is sufficient for anomaly detection to look below it and to the lower part of the corresponding image patch.

A first extension to the above embodiment is to use a vehicle tracking algorithm after the vehicle detection and classification block to increase the probability that the image patch passed to the anomaly detector contains a real vehicle. Using information from several frames before passing an image patch to the anomaly detector is feasible as there are no strict timing constraints on the anomaly detection and classification function.

Another preferred extension to the above embodiment is to collect and use several image patches over a time period, where the vehicle is tracked as an input to a multi-frame CNN anomaly detector/classifier. This is useful as anomalies, like a loose exhaust pipe, tend to move around while driving, which can be captured with such an arrangement.

Furthermore, all image patches can be passed to the service provider who can perform anomaly detection/classification where more computational power is at hand. A more practical arrangement is to perform some basic anomaly detection/classification in the ego vehicle, and if triggered the information providing system can send the image patch, and possibly additional image patches of interest, to the service provider for detailed analysis, e.g., in a cloud-based CNN.

Furthermore, the other vehicle in the field-of-view of the ego vehicle can be informed about the anomaly via the service provider, or directly via a car-to-car communication link. Information about an anomaly may also be transmitted to a mobile communication device of a subscriber of the anomaly service.

The invention also relates to an information providing method, comprising capturing images from a surrounding of the motor vehicle and detecting objects in the surrounding of the motor vehicle by performing image processing on captured images in an information providing system of a motor vehicle, comprising detecting an anomaly of another vehicle by said image processing, and sending out anomaly information about said detected anomaly via a wireless communication device.

Preferably, the information providing system obtains identification information of the other vehicle and sends out the identification information of the other vehicle together with said anomaly information. In a preferred embodiment, the information providing system of the ego vehicle obtains said identification information of the other vehicle by determining a registration image of a part of the other motor vehicle containing registration information of the other vehicle, e.g. a license plate, by said image processing.

Preferably, a remote service provider receives said identification information from said information providing system through wireless communication, extracts an identity of said other vehicle from said identification information, and matches said identity with subscriber information from a subscriber database in order to determine whether or not the other vehicle belongs to a subscriber. The service provider, in case it determines that the other vehicle belongs to a particular subscriber, preferably informs a mobile communication device of the particular subscriber and/or the other vehicle about the detected anomaly via a wireless communication link.

In the following the invention shall be illustrated on the basis of preferred embodiments with reference to the accompanying drawings, wherein:
- Fig. 1: shows a schematic illustration of an on-board information providing system;
- Fig. 2: shows an image captured by a front camera of a motor vehicle;
- Fig. 3: shows a schematic embodiment of data processing in the data processing unit;
- Figs. 4A-4D: show schemes illustrating subscription embodiments of the present invention; and
- Figs. 5A,: 5B show flow chart diagrams illustrating an anomaly detection method according to the present invention.

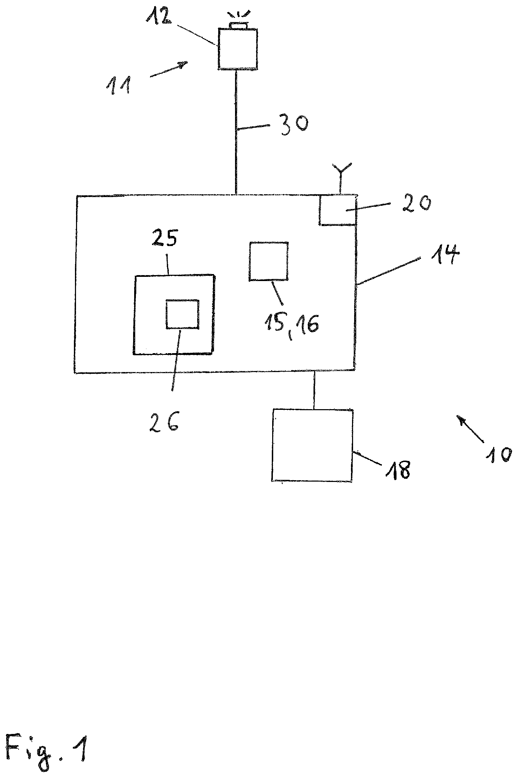

The on-board information providing system 10, or vision system, is mounted, or to be mounted, in or to a motor vehicle and comprises an imaging apparatus 11 for capturing images of a region surrounding the motor vehicle, for example a region in front of the motor vehicle. The imaging apparatus 11, or parts thereof, may be mounted for example behind the vehicle windscreen or windshield, in a vehicle headlight, and/or in the radiator grille. Preferably the imaging apparatus 11 comprises one or more optical imaging devices 12, in particular cameras, preferably operating in the visible wavelength range, in the infrared wavelength range, or in both visible and infrared wavelength range, where infrared covers near IR with wavelengths below 5 microns and/or far IR with wavelengths beyond 5 microns. In some embodiments the imaging apparatus 11 comprises a plurality of imaging devices 12 in particular forming a stereo imaging apparatus 11. In other embodiments, like in Figure 1, only one imaging device 12 forming a mono imaging apparatus 11 can be used. The or each imaging device 12 is preferably a fixed-focus camera, where the focal length f of the lens objective is constant and cannot be varied.

The imaging apparatus 11 is coupled to an on-board data processing unit 14 (electronic control unit, ECU) adapted to process the image data or images 30 received from the imaging apparatus 11. The data processing unit 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing unit 14 may comprise a dedicated hardware device, like a Field Programmable Gate Array (FPGA), an Application Specific Integrated Circuit (ASIC), a Graphics Processing Unit (GPU) or an FPGA and/or ASIC and/or GPU part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing unit 14, or part of its functions, can be realized by a System-On-Chip (SoC) device comprising, for example, FPGA, DSP, ARM, GPU and/or microprocessor functionality. The data processing unit 14 may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of a safety device 18 are performed automatically and continuously during driving in real time.

Image and data processing carried out in the data processing unit 14 advantageously comprises detecting and preferably also classifying possible objects (object candidates) in front of the motor vehicle, such as pedestrians, other vehicles, bicyclists and/or large animals, tracking over time the position of objects or object candidates identified in the captured images. In order to perform object detection and/or classification, an object detector 15 is contained in said data processing unit 14 as a functional piece of software implemented in the data processing unit 14. The object detector 15 is preferably a trained module which has been trained in a training phase in advance, like a trained neural network, in particular a convolutional neural network (CNN). Other kinds of trained or non-trained image processing modules are possible for the object detector 15, which is per se known to the skilled person.

Depending on an estimation performed with respect to a detected and/or tracked object, for example depending on an estimated collision probability, at least one safety device 18 can be activated or controlled. The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

The invention is applicable to autonomous driving, where the ego vehicle is an autonomous vehicle adapted to drive partly or fully autonomously or automatically, and driving actions of the driver are partially and/or completely replaced or executed by the ego vehicle.

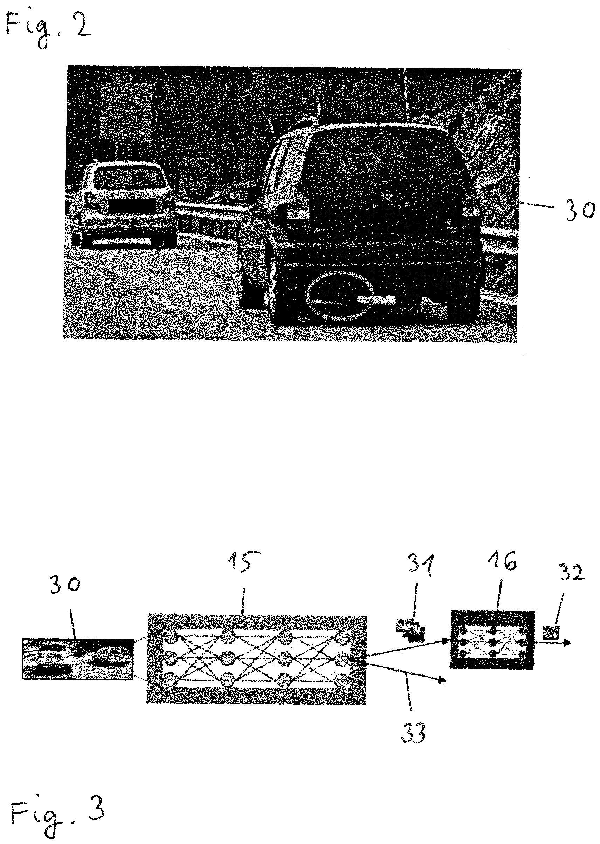

The data processing unit 14 comprises an anomaly detector and/or classifier 16 which is realized as a functional piece of software implemented in said data processing unit 14. The anomaly detector and/or classifier 16 is capable of detecting, and preferably also classifying, one or more types of anomalies of another vehicle in the imaging range of the imaging apparatus 11 (called other vehicle in the following), by processing one or more images 30 captured by said imaging apparatus 11 in which said other vehicle has been imaged. Such anomalies include for example an unbalanced wheel of the other motor vehicle; an abnormally positioned and/or partly detached vehicle part of the other motor vehicle, like a loose exhaust pipe, a loose protective part (e.g. protective underbody plate) and/or a loose or lost license plate. A real-world example where a protective steel plate at the bottom of a car in front of the ego vehicle has been partly detached is marked by an ellipsis in Figure 2.

The anomaly detector and/or classifier 16 is preferably a trained module which has been trained in a training phase in advance, like a trained neural network, in particular a convolutional neural network (CNN). In particular using CNN technology, it is possible not only to detect an anomaly, but also to identify the type of anomaly, for example loose exhaust pipe or unbalanced wheel etc. (classification). Other kinds of trained or non-trained image processing modules are possible for the anomaly detector and/or classifier 16.

In the case that both the object detector 15 and the anomaly detector and/or classifier 16 are realized by a trained module, both the object detector 15 and the anomaly detector and/or classifier 16 may be realized by the same trained module. This embodiment is shown in Figure 1. In this embodiment, the unified trained module 15, 16 is adapted to detect and/or classify objects present in the imaging range of the imaging apparatus 11 by image processing, and simultaneously to detect and/or classify one or more kinds of anomalies of another vehicle present in the imaging range of the imaging apparatus 11 by image processing. The input of the unified trained module 15, 16 is at least one image 30 captured by the imaging apparatus 11, and the output of the unified trained module 15, 16 is information about detected objects, like object class label and/or object bounding box, and information about detected anomalies, like anomaly flag, anomaly class label, anomaly bounding box and/or anomaly image patch.

In the above described embodiment, the unified trained module 15, 16 is trained in advance, i.e. before deployment into the motor vehicle, in a unified manner. More specifically, the module 15, 16 is trained using training images having markings relating to detectable objects in the training images, like object bounding box and/or object class label, and also markings relating to detectable anomalies, like anomaly flag, anomaly class label and/or anomaly bounding box.

Another preferred embodiment is shown in Figure 3. Here, the object detector 15 and the anomaly detector and/or classifier 16 are different modules, and are connected to each other in a cascade formation. Here, the input of the object detector 15 is at least one image 30 captured by the imaging apparatus 11, and the output of the object detector 15 is information about detected objects, like object class label and/or object bounding box. The input of the anomaly detector and/or classifier 16 comprises output from the object detector 15, in particular information about objects detected by the object detector 15. In the embodiment of Figure 3, the output of the object detector 15 input to the anomaly detector are image patches 31, where each image patch is the image content of a bounding box around an object detected by the object detector 15. In Figure 3, for example, three objects have been detected in the image 30 by the image detector 15, and three corresponding image patches 13 are forwarded to the anomaly detector and/or classifier 16. The output of the anomaly detector and/or classifier 16 is information 32 about detected anomalies, like anomaly flag, anomaly class label, anomaly bounding box and/or anomaly image patch.

Output from the object detector 15, in particular information about detected objects, like object class label and/or object bounding box, may be used for other purposes in the data processing unit 14 than for anomaly detection, for example for calculating a collision probability with a detected object. This is indicated by arrow 33 in Figure 3.

In the embodiment of Figure 3, the anomaly detector and/or classifier 16 is trained in advance, i.e. before deployment into the motor vehicle independent of a possible training of the object detector 15. More specifically, the anomaly detector and/or classifier 16 is trained using training images having markings relating to detectable anomalies, like anomaly flag, anomaly class label, anomaly bounding box and/or anomaly image patch.

The information providing system 10 preferably comprises a wireless communication device 20 for wireless communication with an external (to the ego vehicle 40) communication unit, like a communication unit in another vehicle, a base station 44 of a terrestrial mobile communication network, or a satellite communication device. The wireless communication device 20 can be part of the electronic control unit 14 shown in Figure 1, or be part of another electronic control unit of the ego vehicle 40, or a separate communication device.

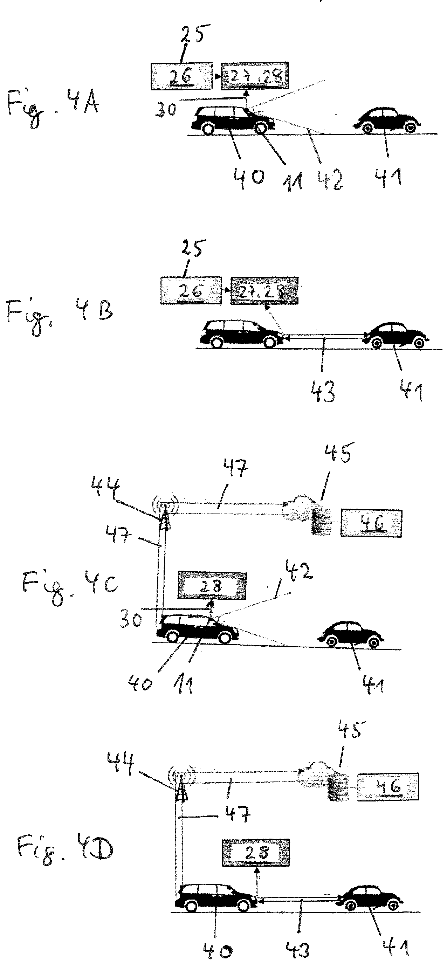

In the following, several embodiments of a s subscription service under the present invention are described with reference to Figures 4A to 4D.

In the embodiment illustrated in Figure 4A, the ego vehicle 40, in particular the information providing system 10 thereof, comprises a database 26 wherein subscriber information of all subscribers of a subscription service is stored, for example in non-volatile data memory 25. The subscriber information database 26 can be downloaded into the data memory 25 at service occasions, or via the wireless communication device 20 establishing a communication link to a service provider.

The data processing unit 14 is adapted to obtain identification information of the other motor vehicle 41 (here vehicle in front) which is in the field-of-view 42 of the imaging apparatus 11, here a front camera 12, by image processing of images 30 from the imaging apparatus 11. For example, the data processing unit 14 may execute an algorithm 28 that recognizes a number plate of the other motor vehicle 41.

A matching algorithm 27 implemented in said data processing unit 14 is adapted to match the identification information obtained by image processing with the subscriber information stored in said database 27. As a result of the matching process performed by the matching algorithm 27, it is determined whether the other vehicle 41 belongs to a subscriber of the subscription service or not. Depending on this finding, a suitable action can be taken by the data processing unit 14 as described elsewhere.

In the embodiment illustrated in Figure 4B, the data processing unit 14 is adapted to obtain the identification information of the other motor vehicle 41 by sending out an identity request via the communication unit 20 through a car-to-car communication connection 43. In response to the identity request, the other vehicle 41 returns the requested identity information to the information providing system 10 of the ego vehicle 40 through said car-to-car communication connection 43. The processing regarding the obtaining of the subscriber information from the database 26 and the matching algorithm 27 matching the identification information with the subscriber list is the same as described with respect to Figure 4A.

In the embodiment illustrated in Figure 4C, the data processing unit 14 is adapted to obtain the identification information in the same manner as described above with respect to Figure 4A. More specifically, a vehicle identification algorithm 28 is adapted to determine the identification information relating to the identity of the other vehicle 41 by image processing of images 30 captured by the imaging apparatus 11, as described above with respect to Figure 4A.

After determining the identification information, the data processing unit 14 transmits or sends out the identification information, together with a subscriber request, via said communication device 20 to an external communication unit 44, here a base station of a terrestrial mobile communication network, and further to a remote service provider 45 having a subscriber database 46 wherein subscriber information of all subscribers of a subscription service is stored, using a wireless communication connection 47. Instead of a terrestrial communication network having a base station 44, a satellite communication system could be used for establishing the wireless communication connection 47. The service provider 45 matches the identification information received from the information providing system in the motor vehicle 40 with the subscriber list in the subscriber database 46, and determines whether or not the other vehicle 41 belongs to a subscriber of the subscription service. In response to the subscriber request sent out by the data processing unit 14, the service provider 45 returns to the data processing unit 14 this information whether or not the other vehicle 41 belongs to a subscriber of the subscription service, allowing the data processing unit 14 to initiate a corresponding suited action.

In the embodiment illustrated in Figure 4D, the data processing unit 14 is adapted to obtain the identification information in the same manner as described above with respect to Figure 4B. More specifically, a vehicle identification algorithm 28 is adapted to determine the identification information relating to the identity of the other vehicle 41 by sending out an identity request via the communication unit 20 through a car-to-car communication connection 43, and receiving the requested identity information in response from the other vehicle 41 through said car-to-car communication connection 43. The processing regarding the obtaining of the information whether or not the other vehicle 41 belongs to a subscriber of the subscription service by sending out a subscriber request to the service provider 45 is the same as described with respect to Fig. 4C.

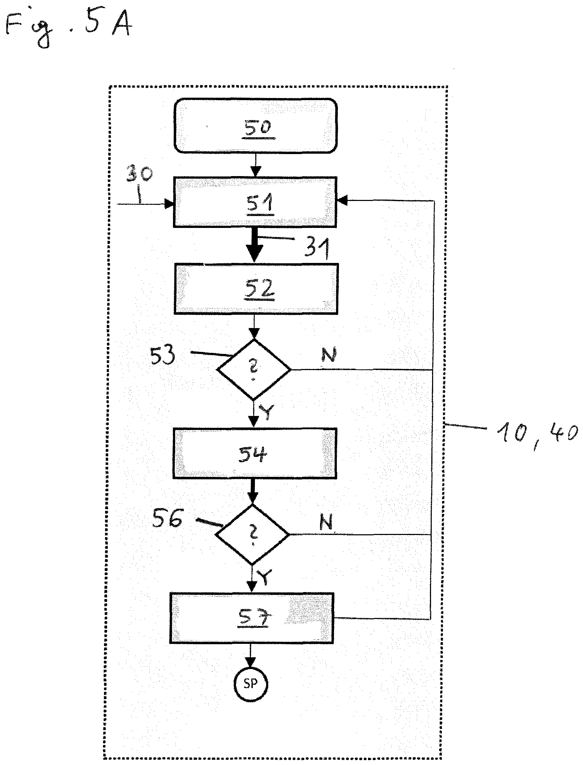

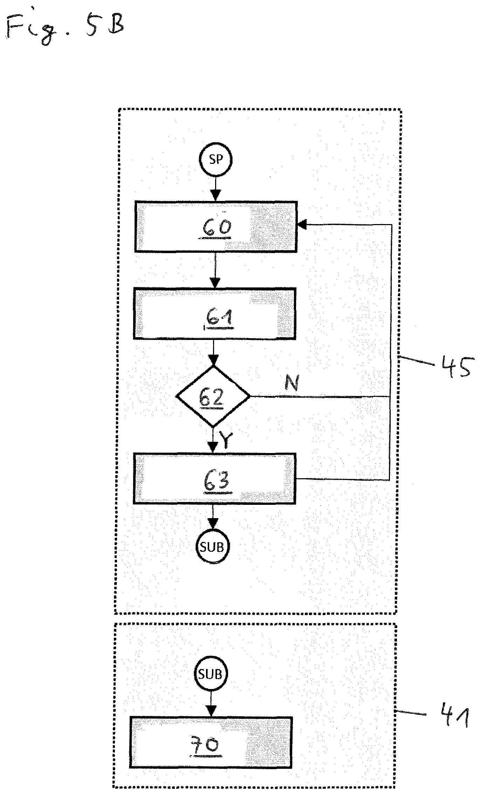

In the following, a preferred embodiment of a service method under the invention is described with respect to Figures 5A, 5B, where communication involves the ego vehicle 40, a service provider 45 and the other vehicle 41. In the embodiment, the ego car 40 to service provider 45 communication comprises transmission of registration image patches and textual information about a detected/classified anomaly. Vehicle patch images can also be passed to the service provider 45 for further processing. In such a case it is not needed (although possible) to transmit the full image, but transmission of image patches with detected vehicles is sufficient for further processing. Also, the method described in the following relates to the subscription variant of Figure 4C, where it shall be understood that the method of Figures 5A, 5B can be readily applied to the other embodiments of Figures 4A, 4B, 4D in an analogous manner.

In the following, steps 50 to 57 take place in the ego vehicle 40, more particularly in the information providing system 10 thereof.

In step 50, the vehicle detection and classification algorithm 15 in the data processing unit 14 is started.

In step 51, the data processing unit 14 gets a new image 30 from the imaging apparatus 11 and runs the vehicle detection/classification algorithm 15, and outputs image patches 31 of detected and/or classified other vehicles.

In step 52, the anomaly detector and/or classifier 16, based on all image patches 31 showing detected/classified other vehicles as obtained in step 51, runs the anomaly detection algorithm for all such image patches.

If an anomaly is detected in step 52 (Yes in the conditional operator 53), then the data processing unit 14 obtains in step 54 the identification information of the other vehicle, here by image processing, i.e. by running an image-based vehicle registration matching algorithm to get a small image patch (in the following called registration image) around the other vehicles registration plate, where the same vehicle patch as was used for anomaly detection is used to get the registration image.

If a registration image is found, or more generally if identification information can be obtained in step 43 (Yes in the conditional operator 56), processing proceeds to step 57, otherwise (No in the conditional operator 56) processing goes back to step 51.

If no anomaly is detected in step 52 (No in the conditional operator 53), processing goes back to step 51 as well.

In step 57, the data processing device 14 communicates that an anomaly, optionally its type (like loose exhaust pipe, loose protective plate, etc.), has been detected for a vehicle 41 associated with the registration image to the remote service provider SP 45 (hence the anomaly and the registration image are transmitted).

After this, processing goes back to step 51 in the data processing unit 14.

The following steps 60 to 63 take place in the remote service provider 45.

In step 60, the service provider 45 receives the transmitted information, namely the anomaly information and the registration image, from the information providing system 10 of the ego vehicle 40 via the wireless communication connection 47.

In subsequent step 61, the service provider 45 is adapted to check automatically the registration image (or more generally, the identity information) belongs to a subscriber of the subscription service. This is done by running an algorithm matching the registration image to a subscriber ID from which it is determined whether the vehicle 41 in front belongs to a subscriber or not.

If it is determined in step 61 that the other vehicle 41 belongs to a subscriber (Yes in the conditional operator 62), the service provider 45 automatically informs a mobile communication device of the subscriber and/or the other vehicle 41 of the detected anomaly via a suited communication link, preferably a wireless communication link, in step 63. Alternatively, the service provider 45 sends back a corresponding subscriber information to the information providing system 10 of the ego vehicle 40 via the wireless communication connection 47, and the information providing system 10 of the ego vehicle 40 automatically informs a mobile communication device of the subscriber and/or the other vehicle 41 of the detected anomaly via a suited communication link, for example via the car-to-car communication link 43.

The subscriber, i.e. a mobile communication device of the subscriber, and/or the other motor vehicle 41 receives the information of the detected anomaly in step 70.

If it is determined in step 61 that the other vehicle 41 does not belong to a subscriber (No in the conditional operator 62), processing returns to step 60 in the service provider 45.

After step 63, processing goes back to step 60 in the service provider 45.

## Claims

1. An on-board information providing system (10) of a motor vehicle (40), comprising an imaging apparatus (11) adapted to capture images from a surrounding of the motor vehicle (40), a data processing unit (14) adapted to detect objects in the surrounding of the motor vehicle (40) by performing image processing on images captured by said imaging apparatus (11), and a wireless communication device (20) adapted to communicate with an external receiver (41; 45), **characterized in that** said data processing unit (14) is adapted to detect an anomaly of another vehicle (41) by said image processing, and to send out anomaly information about said detected anomaly via said wireless communication device (20).

2. The information providing system as claimed in claim 1, **characterized in that** said wireless communication device (20) is adapted for direct communication (43) with said other vehicle (41).

3. The information providing system as claimed in any one of the preceding claims, **characterized in that** said wireless communication device (20) is adapted for wireless communication (47) with a remote service provider (45).

4. The information providing system as claimed in any one of the preceding claims, **characterized in that** said anomaly comprises one or more of:
- an unbalanced wheel of the other motor vehicle (41);
- an abnormally positioned and/or partly detached vehicle part of the other motor vehicle (41), like exhaust pipe, protective part and/or license plate.

5. The information providing system as claimed in any one of the preceding claims, **characterized in that** the imaging apparatus (11) comprises an infrared imaging device adapted to detect hot spots in the vehicle environment, and said data processing unit (14) is adapted to take information about hot spots into account in said anomaly detection.

6. The information providing system as claimed in any one of the preceding claims, **characterized in that** an anomaly detector and/or classifier (16) based on a neural network is used in said data processing unit (14) for detecting said anomaly of the other motor vehicle.

7. The information providing system as claimed in any one of the preceding claims, **characterized in that** said data processing unit (14) is adapted to obtain identification information of the other motor vehicle (41), and to compare said identification information with subscriber information available to said data processing unit (14).

8. The information providing system as claimed in claim 7, **characterized in that** said data processing unit (14) is adapted to obtain said identification information of the other motor vehicle (41) via image processing of images captured by said imaging apparatus (11).

9. The information providing system as claimed in any one of the preceding claims, **characterized in that** said data processing unit (14) is adapted to obtain said identification information of the other motor vehicle (41) by sending out an identity request via said communication device (20), in particular through a car-to-car communication connection.

10. The information providing system as claimed in any one of the preceding claims, **characterized in that** a database (26) with subscriber information is stored in a data memory (25) of said information providing system (10).

11. The information providing system as claimed in any one of the preceding claims, **characterized in that** said data processing unit (14) is adapted to obtain said subscriber information of the other motor vehicle (41) by sending out a subscriber request via said communication device (20) .

12. An information providing method, comprising
- capturing images from a surrounding of the motor vehicle (40) and
- detecting objects in the surrounding of the motor vehicle (40) by performing image processing on captured images
in an information providing system (10) of a motor vehicle (40), **characterized by** detecting an anomaly of another vehicle (41) by said image processing, and sending out anomaly information about said detected anomaly via a wireless communication device (20).

13. The information providing method as claimed in claim 12, wherein the information providing system (10) obtains identification information of the other vehicle (41) and sends out the identification information of the other vehicle (41) together with said anomaly information.

14. The information providing method as claimed in claim 13, **characterized in that** said information providing system (10) obtains said identification information of the other vehicle (41) by determining a registration image of a part of the other motor vehicle (41) containing registration information of the other vehicle by said image processing.

15. The information providing method as claimed in claim 13 or 14, **characterized in that** a remote service provider (45) receives said identification information from said information providing system (10) through wireless communication (47), extracts an identity of said other vehicle (41) from said identification information, and matches said identity with subscriber information from a subscriber database (46) in order to determine whether or not the other vehicle (41) belongs to a subscriber; wherein preferably said service provider (45), in case it determines that the other vehicle (41) belongs to a particular subscriber, informs a mobile communication device of the particular subscriber and/or the other vehicle (41) about the detected anomaly via a wireless communication link.
